# EUROPÄISCHE PATENTANMELDUNG

(11) **EP 2 910 108 A1**
(43) Veröffentlichungstag der Anmeldung: **26.08.2015**
(21) Anmeldenummer: 14000595.0
(22) Anmeldetag: 20.02.2014
(51) Int. Cl.: A01F 25/20

(54) **Futtermischwagen mit schwenkbarer Ladevorrichtung**

(71) Anmelder: B. Strautmann & Söhne GmbH & Co.KG, 49196 Bad Laer (DE)
(72) Erfinder: Marquering, Johannes, 49176 Hilter (DE); Lasar, Bernd, 49324 Melle (DE)
(74) Vertreter: Träger, Denis

(57) **Zusammenfassung**

Die Erfindung betrifft einen Futtermischwagen (1) mit einer schwenkbarer Ladevorrichtung (2), welche mittels einer ersten Trennvorrichtung (3) Silage von einem Flachsilo abtrennt und es über ein Förderband (5) in einen Mischbehälter (8) des Futtermischwagens (1) fördert. Zunehmend werden Flachsilos mit Höhenmaßen angelegt, deren Oberkanten von den Trennvorrichtungen der hochgeschwenkten Ladevorrichtungen nur schlecht, oder, bei Überschreiten einer maximalen Entnahmehöhe, gar nicht mehr erreicht werden können. Zur Entnahme von Silage aus solch hohen Flachsilos werden zusätzliche Arbeitsmaschinen, beispielsweise Teleskoplader mit vorgesetzten Entnahmewerkzeugen, eingesetzt.

Die Aufgabenstellung dieser Erfindung ist es, einen Futtermischwagen zu schaffen, der wie bisher eingesetzt werden kann, jedoch mit einer zusätzlichen Trennvorrichtung, die der vorhandenen Ladevorrichtung zugeordnet ist, die Entnahmehöhen an Flachsilos steigert.

Die Erfindung schlägt vor, der Ladevorrichtung (2) eines gattungsgemäßen Futtermischwagens eine zweite Trennvorrichtung (9) mit einem Trennorgan (13) zur Erhöhung des Entnahmebereichs zuzuordnen.

In einer vorteilhaften Ausführung umfasst die zweiten Trennvorrichtung (9) einen Teleskoparm (10) oder einen Schwenkarm (27).

## Beschreibung

Die Erfindung betrifft einen Futtermischwagen mit schwenkbarer Ladevorrichtung, welche mittels einer Trennvorrichtung Silage von einem Flachsilo abtrennt und es über ein Förderband in einen Mischbehälter des Futtermischwagens fördert.

Futtermischwagen dieser Art werden in landwirtschaftlichen Betrieben zur Entnahme, zum Mischen und Verteilen von Silagefutter verwendet. Hierbei wird die Silage mittels der Trennvorrichtung der Ladevorrichtung von einem Flachsilo abgetrennt, über das Förderband in den Mischbehälter gebracht und nach dem Mischvorgang dem Vieh zur Fütterung vorgelegt. Bei den Futtermischwagen kann es sich um selbstfahrende oder um angehängte Fahrzeuge handeln.

Zunehmend werden Flachsilos mit Höhenmaßen angelegt, deren Oberkanten von den Trennvorrichtungen der hochgeschwenkten Ladevorrichtungen nur schlecht, oder, bei Überschreiten einer maximalen Entnahmehöhe, gar nicht mehr erreicht werden können. Da die Ladevorrichtung in aller Regel um eine Drehachse schwenkbar ist, bilden sich bei der Entnahme an der Stirnseite des Flachsilos konkave Anschnittflächen aus. Mit zunehmender Entnahmehöhe entstehen so konkave Wölbungen, deren unterhöhlte Überhänge zum Abbrechen neigen und dadurch Unfälle und Zerstörungen verursachen können. Weiterhin werden durch das Abbrechen zerklüftete Anschnittflächen hinterlassen und vor dem Flachsilo unsaubere Anhäufungen der Silage verursacht.

Um Futter von hohen Flachsilos zu entnehmen werden vielfach schwere mit Teleskoparmen ausgestattete Hoflader eingesetzt, deren Teleskoparme mit vorgesetzten Entnahmewerkzeugen verlängert werden.

Die Arbeitsweise dieser Entnahmetechnik ist z. B. in der Agrarfachzeitschrift "Profi", Ausgabe 12/2013, herausgegeben von der Landwirtschaftsverlag GmbH, D-48165 Münster, beschrieben. Diese Arbeitsverfahren sind nur in Verbindung mit einem teuren Hoflader durchführbar, sie hinterlassen weitgehend raue Anschnittsflächen, welche zur Qualitätsminderung der Silage beitragen und erfordern zusätzliche Arbeitsgänge um die sich am Boden ansammelnde Silage in einen Futtermischwagen einzubringen.

Teleskopierbare bzw. verkürzbare Ladeeinrichtungen an Futtermischwagen sind bekannt, jedoch für die Futterentnahme an hohen Flachsilos nicht vorgesehen bzw. geeignet. Eine Ausführung nach der WO 00/71239 A1 zeigt z. B. eine Ladeeinrichtung eines Futtermischwagens für normale Silohöhen, deren Teleskopiervorrichtung nur die Aufgabe besitzt, die Gesamtlänge des Fahrzeuges zur Verbesserung der Manövrierfähigkeit zu verkürzen.

Eine nach der EP 0383175 A1 bekannte Ausführung einer Ladevorrichtung besitzt einen Schwenkarm, welcher lediglich verkürzbar ausgeführt ist um ebenfalls Manövrierfähigkeit und Transportmöglichkeiten zu verbessern.

Die Aufgabenstellung dieser Erfindung ist es, einen Futtermischwagen zu schaffen, der wie bisher eingesetzt werden kann, jedoch mit einer zusätzlichen Trennvorrichtung, die der vorhandenen Ladevorrichtung zugeordnet ist, die Entnahmehöhen an Flachsilos steigert.

Diese Aufgabe wird gelöst durch einen gattungsgemäßen Futtermischwagen, an dem der Ladevorrichtung eine zweite Trennvorrichtung mit einem Trennorgan zur Erhöhung des Entnahmebereichs zugeordnet ist.

Zur Erreichung der Oberkanten höherer Flachsilos, die von den bekannten Trennvorrichtungen an Ladevorrichtungen von Futtermischwagen nicht mehr erreicht werden können, wird erfindungsgemäß vorgesehen der vorhandenen Ladevorrichtung eine zusätzliche zweite Trennvorrichtung zuzuordnen, welche die Entnahmehöhe merklich heraufsetzt. Hierdurch ist die Bereitstellung eines teuren Hofladers überflüssig und der zusätzliche Arbeitsaufwand des Überladens der am Boden angesammelten Silage in den Mischbehälter des Futtermischwagens entfällt, da die Ladevorrichtung die von ihr erfassbare Silage beim Abtrennen vom Flachsilo dem Mischbehälter direkt zuführt und am Boden abgelegte Silage ebenfalls aufnimmt.

Alle Arbeitsabläufe sind vom Futtermischwagen durchführbar.

Von Vorteil ist es, wenn die zweite Trennvorrichtung an der Oberseite der Ladevorrichtung angeordnet ist. Insbesondere bei selbstfahrenden Futtermischwagen werden so die Sichtverhältnisse eines Bedieners bei Transportfahrten mit in einer Ruheposition befindlicher Ladevorrichtung nicht beeinträchtigt. Weiterhin reduziert die Anordnung an der Oberseite den konstruktiven Aufwand zur Erreichung einer großen Entnahmehöhe.

In einer vorteilhaften Ausführung ist die zweite Trennvorrichtung mit einem Teleskoparm, welcher ein Basisrohr und ein Tragrohr umfasst, ausgestattet. Das Tragrohr ist in dem Basisrohr translatorisch verschiebbar. Das Tragrohr ist gegenüber dem Basisrohr nach außen, das heißt in Richtung auf die gewünschte Futterentnahmestelle (Flachsilo), verschiebbar und an seinem äußeren Ende mit einem Trennorgan zur Entnahme von Futter aus dem Flachsilo ausgestattet.

In einer Ausführung ist das Basisrohr des Teleskoparmes der zweiten Trennvorrichtung starr mit der um eine Achse schwenkbaren Ladevorrichtung verbunden und vollführt damit auch deren Schwenkbewegung. Erste und zweite Trennvorrichtung sind somit um die gleiche Achse schwenkbar. Bei im Teleskoparm in Endposition eingezogener zweiter Trennvorrichtung können erste Trennvorrichtung und zweite Trennvorrichtung bei der Futterentnahme zusammenwirken.

Die Silageentnahme von hohen Flachsilos beginnt mit dem Heranfahren des Futtermischwagens an das Flachsilo mit hochgeschwenkter Ladevorrichtung, wobei der Teleskoparm der zusätzlichen Trennvorrichtung mit seinem Trennorgan bis über die entsprechende Silohöhe angehoben ist. Durch Herabschwenken der Beladevorrichtung und Verkürzen des Tragarms der zweiten Trennvorrichtung wird zunächst an der Stirnseite, vornehmlich oberhalb der von der ursprünglichen Ladevorrichtung erreichbaren Anschnittsfläche, Silage abgetrennt, welche sich am Boden des Silos sammelt. Hiernach wird diese Silage von der Fräswalze der Ladeeinrichtung aufgehoben und dem nachgeordneten Förderband zur Weiterleitung in den Mischbehälter übergeben. Das Trennorgan der zweiten Trennvorrichtung ist hierbei bis auf oder hinter die maximale Länge der Ladevorrichtung durch Einziehen des Tragarmes zurückgeführt.

Anschließend wird mit weiterhin eingezogenem Trennorgan von dem von der Ladeeinrichtung erfassbaren unteren Teil der Stirnwand Silage abgetrennt und in bekannter Arbeitsweise dem Mischbehälter zugeführt.

In einer weiteren Ausführungsform ist das Basisrohr des Teleskoparmes nicht starr mit der Ladevorrichtung verbunden. Der Teleskoparm ist vielmehr um eine Achse gegenüber der Ladevorrichtung schwenkbar angeordnet. Vorzugsweise ist die Drehachse des Teleskoparmes an die Ladeeinrichtung gekoppelt, so dass bei Verschwenken der Ladeeinrichtung auch der Teleskoparm mitgeschwenkt wird, der Teleskoparm selbst jedoch darüber hinaus noch eine zusätzliche Schwenkbewegung durchführen kann. Zur Entnahme von Futter aus einer erhöhten Position muss somit nicht die gesamte Ladevorrichtung verschwenkt werden. Es ist vielmehr ausreichend, wenn lediglich der Teleskoparm ausgefahren und verschwenkt wird. Das Futter aus oberen Schichten wird dann von dem an der zweiten Trennvorrichtung angebrachten Trennorgan gelöst, fällt nach unten vor das Futterlager und kann in einem zweiten Arbeitsschritt von der ersten Trennvorrichtung aufgenommen und über das Förderband dem Mischbehälter zugeführt werden.

Unabhängig davon, ob die zweite Trennvorrichtung starr mit der Ladevorrichtung und damit der ersten Trennvorrichtung verbunden oder gegenüber dieser um eine eigene Drehachse schwenkbar ist, umfasst der Teleskoparm ein Trennorgan, welches am äußeren Ende des Tragrohres angebracht ist.

Bei dem an der zweiten Trennvorrichtung angeordneten Trennorgan kann es sich beispielsweise um
- einen Tragbalken mit daran starr angeordneten Schneidmessern,
- einen Tragbalken mit waagerecht oszillierenden Schneidmessern,
- einen Reißkamm oder um
- eine an dem Tragrohr angeordnete Fräsvorrichtung
handeln. Schneidmesser und Fräswalze erzeugen am Flachsilo eine auch im oberen Entnahmebereich, der von der Ladevorrichtung eines normal ausgeführten Futtermischwagens nicht mehr erfasst werden kann, eine saubere, glatte Oberfläche.

Die Anwendung eines preiswerteren Reißzinkenkammes ist dort möglich, wo auf eine saubere Anschnittsfläche verzichtet werden kann, z. B. an Siloanlagen für die Beschickung von Biogasanlagen.

Besonders vorteilhaft ist es, wenn dass Trennorgan der zweiten Trennvorrichtung eine Breite Y aufweist, welche in etwa einer Breite der ersten Trennvorrichtung Y' entspricht. Bei eingefahrenem Teleskoparm können erste und zweite Trennvorrichtung so zusammenarbeiten, dass die zweite Trennvorrichtung zunächst das Futter aus dem Flachsilo löst und die erste Trennvorrichtung anschließend nur wenig oder gar keine Trennarbeit mehr zu leisten hat, sondern vielmehr als Fördereinrichtung zur Zuführung des von der zweiten Trennvorrichtung abgetrennten Futters in Richtung Förderband und damit Mischbehälter dienen kann.

Erste und zweite Trennvorrichtung können auch so aufeinander abgestimmt sein, dass das Trennorgan der zweiten Trennvorrichtung bis auf oder hinter eine von der ersten Trennvorrichtung erzeugte Schnittlinie (S) einziehbar ist.

In einer weiteren Ausführungsform umfasst der Futtermischwagen ein Gestell mit einer Achse, an dem die zweite Trennvorrichtung um eine Achse schwenkbar angeordnet ist. Damit ist die zweite Trennvorrichtung vollständig von der ersten Trennvorrichtung entkoppelt. Bei Verschwenken der ersten Trennvorrichtung ist es möglich, die zweite Trennvorrichtung in einer Ruheposition zu belassen und nicht mit zu verschwenken.

In einer weiteren Ausführungsform umfasst die zweite Trennvorrichtung einen Schwenkarm, welcher im Bereich des äußeren Endes der Ladevorrichtung um eine Achse schwenkbar gelagert ist.

Nachstehend wird die Erfindung an Anführungsbeispielen beschrieben und in Zeichnungen dargestellt.
- Fig. 1: zeigt die Seitenansicht des Futtermischwagens mit einer an der Oberseite der Ladevorrichtung angeordneten Trennvorrichtung.
- Fig. 2: zeigt die Seitenansicht des Futtermischwagens, dessen Trennvorrichtung einen Reißkamm darstellt.
- Fig. 3: zeigt die Seitenansicht des Futtermischwagens, dessen Trennvorrichtung eine Fräsvorrichtung darstellt.
- Fig. 4: zeigt die Draufsicht des Futtermischwagens.
- Fig. 5.0-5.3: zeigt jeweils die Ausführung eines Trennorgans
- Fig. 6: zeigt eine starre Anordnung der Trennvorrichtung an der Ladevorrichtung
- Fig. 7: zeigt eine Anordnung der Trennvorrichtung, die direkt am Gestell des Futtermischwagens schwenkbar gelagert ist.
- Fig. 8: zeigt eine Ausführung einer schwenkbaren Trennvorrichtung, die am äußeren Ende der Beladeeinrichtung auf einer Achse gelagert ist.

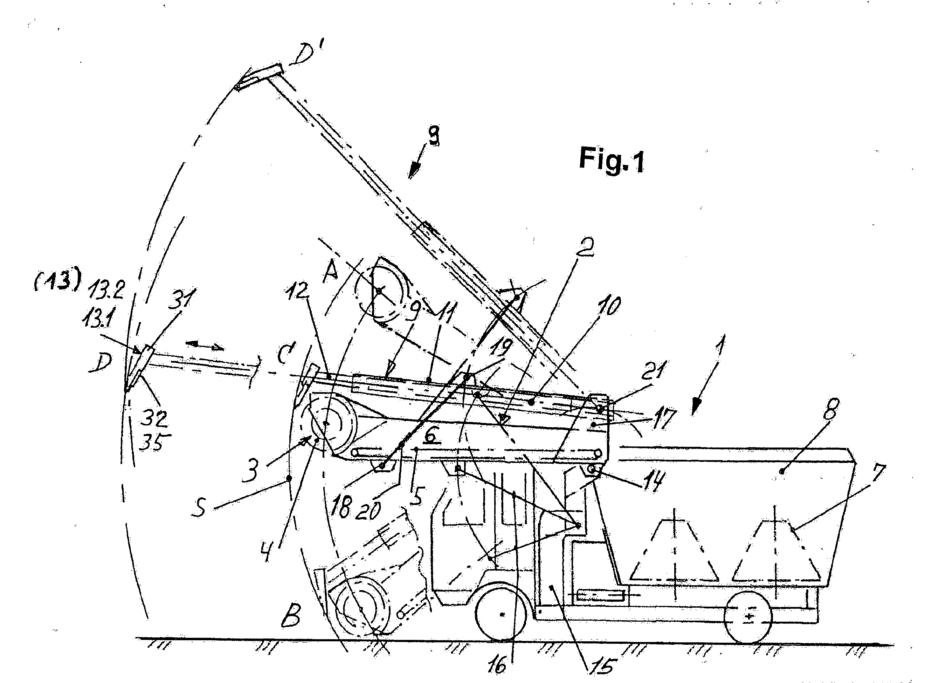

In Figur 1 ist ein selbstfahrenden Futtermischwagen 1 dargestellt, an den eine Ladevorrichtung 2 angebracht ist, die in bekannter Arbeitsweise mit einer Fräswalze 4 einer ersten Trennvorrichtung 3 an der Stirnseite eines nicht dargestellten Flachsilos Silage abtrennt und über ein in einem Förderschacht 6 angeordneten Förderband 5 in einen mit mindestens einer Mischschnecke 7 bestückten Mischbehälter 8 einbringt.

Um die Entnahme von Silage an einem hoch angelegten Flachsilo zu ermöglichen, ist oberhalb der Beladevorrichtung 2 eine zusätzliche zweite Trennvorrichtung 9 angeordnet, welche einen Teleskoparm 10 mit einem Trennorgan 13 umfasst. Der Teleskoparm umfasst ein Basisrohr 11, welches ein darin translatorisch verschiebbares Tragerohr 12 umschließt. Das Tagrohr 12 ist an seinem äußeren Ende mit einem Trennorgan 13 bestückt. Die Verschiebbarkeit des Tragerohres 12 erfolgt vorzugsweise über Hubzylinder, wie sie in allgemein bekannter Weise in Teleskoparmen 10 wirken.

Die Ladevorrichtung 2 ist um eine Achse 14 am Gestell 15 des Futtermischwagens 1 schwenkbar angeordnet. Die Schwenkbewegungen werden über Hubzylinder 16 ausgeführt und gesteuert. An der Oberseite der Ladevorrichtung 2 ist die zusätzliche zweite Trennvorrichtung 9 schwenkbar angeordnet, wobei deren Teleskoparm 10 mit dem Basisrohr 11 um eine Achse 21 schwenkbar an Haltern 17 der Ladevorrichtung 2 gelagert ist.

Auf- und Abwärtsbewegungen der zweiten Trennvorrichtung 9 werden über die an der Ladevorrichtung 2 und am Basisrohr 11 an den Lagerpunkten 18; 19 angreifenden Hubzylinder 20 gesteuert. Die ineinander verschiebbaren Teleskoprohre, das Tragrohr 12 und das Basisrohr 11 werden bevorzugt mit rechteckigem oder quadratischem Querschnitt ausgeführt.

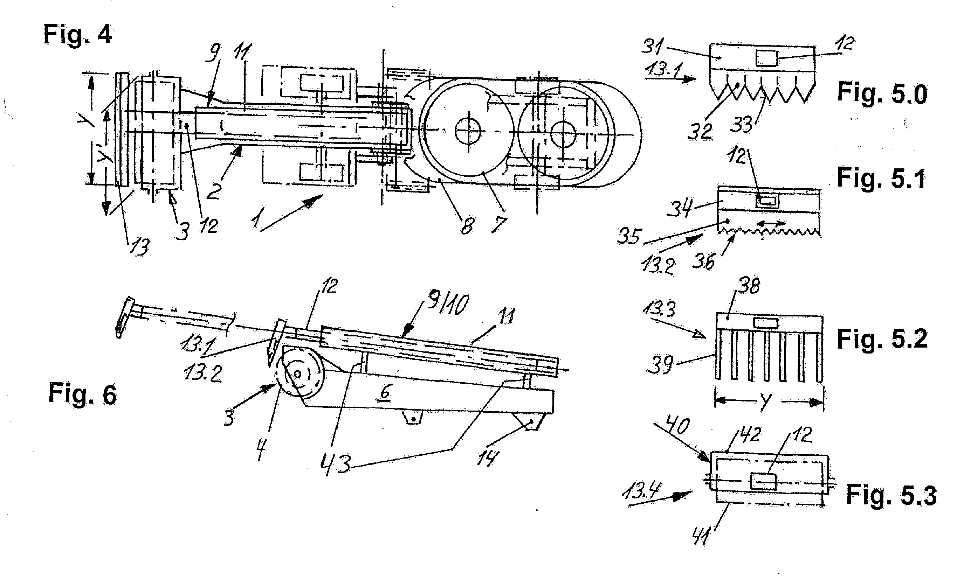

Die Figuren 5.0 bis 5.3 zeigen das Trennorgan 13 in den unterschiedlichen Ausführungen mit starren Messern 13.1, oszillierenden Schneidmessern 13.2, Reißkamm 13.3 und Fräsvorrichtung 13.4. Die Wahl einer geeigneten Ausführung ermöglicht eine Anpassung an unterschiedliche Arbeitsvorgänge und Silagen, wie z. B. Mais- oder Grassilage.

Das Trennorgan 13.1 (Fig. 5.0) ist in einer einfachen Ausführung derart ausgebildet, dass an seinem stirnseitig am Tragrohr 12 angebrachten Tragebalken 31 fest stehende Schneidmesser 32 mit nach unten gerichteten, zackenförmigen Schneiden 33 angeordnet sind.

Ein verbessertes, eine saubere Anschnittsfläche hinterlassendes Trennorgan 13.2 (Fig. 5.1) ist derart ausgeführt, dass am Tragbalken 34 eine Schneidvorrichtung angeordnet ist, die in an sich bekannter Weise mit mindestens einem waagerecht oszillierenden Schneidmesser 35 mit nach unten gerichteten Schneiden 36 besetzt ist.

Ein einfaches und schneller arbeitendes Trennorgan 13.3 (Fig. 5.2) wird durch einen Reißkamm 37 ausgebildet. Der Reißkamm 39 umfasst einen Tragbalken 38 mit an der Unterseite kammartig angeordneten Reißzinken 39. Bei der Entnahme hinterlässt die Verwendung eines Reißkammes 37 eine zerklüftete Anschnittsfläche.

Zum Abfräsen von Silage ist ein Trennorgan 13.4 (Fig. 5.3) vorgesehen, dessen am Tragerohr 12 angeordnete Fräsvorrichtung 40 mittels ihrer rotierenden Fräswalze 41 die Silage vom Flachsilo abtrennt. Eine Haube 42 deckt die Fräswalze 41 ab, und verhindert bzw. reduziert das Herausschleudern von durch die Fräse beim Arbeitseinsatz aus dem Flachsilo gelösten Futterpartikeln. Die Haube der Fräswalze 41 ist derart ausgeführt, bzw. verstärkt, dass sie mit dem Tragrohr 12 verbunden ist.

Dort wo möglichst glatte Anschnittsflächen erzeugt werden sollen, wird vorzugsweise das Trennorgan 13.2 mit oszillierendem Schneidmesser 35 eingesetzt, welches insbesondere bei Grassilage, durch exakte Schneidarbeit, das Ablösen erleichtert. Bei überwiegender Entnahme von Maissilage und/oder dann, wenn eine glatte Anschnittsfläche von untergeordneter Bedeutung ist, kann der Einsatz des einfacheren Trennorgans 13.1, mit starren, klingenförmigen Schneidmessern 32 erwogen werden.

Alle Trennorgane 13 können alternativ zur Direktverbindung mit dem Tragarm 12, auch über Flanschverbindungen mit diesen verbunden werden und sind untereinander austauschbar.

Zur Silageentnahme wird der Futtermischwagen 1 mit in Position A angehobener Ladevorrichtung 2 an den Flachsilo herangefahren. Ist in dieser Position A die Oberkante des Flachsilos von der Trennvorrichtung 3 nicht erreichbar, wird durch Ausschieben des Tragerohres 12 und Verschwenkens der zweiten Trennvorrichtung 9, aus der Lage C bis in die Lage D bzw. D', die Zugriffshöhe erweitert. Das Trennorgan 13 wird an der Oberkante des Flachsilos angesetzt, durch Verschwenken des Teleskoparmes 10 mittels der Hubzylinder 20 und durch Einziehen des Tragarmes 12 löst es hierbei Silage vom Silostock ab.

Durch Verfahren, bzw. Versetzen des Futtermischwagens kann die Entnahmeleistung vorteilhaft beeinflusst werden.

Die von der zweiten Trennvorrichtung 9 abgetrennte Silage sammelt sich am Boden. Ist eine genügende Menge abgelegt, wird das Trennorgan 13 aus der Lage D in die Lage C zurückgeführt. Die Beladevorrichtung 2 wird in die Position B abgesenkt, hiernach wird die Silage mittels der Fräswalze 4 aufgenommen und über das Förderband 5 in den Mischbehälter 8 gefördert. Anschließend fährt der Futtermischwagen 1 mit in Position A gebrachter Ladevorrichtung 2 an den auf erreichbare Höhe gebrachten Flachsilo heran und trennt in gewohnter Weise die Silage ab und fördert diese in den Mischbehälter. Das Trennorgan 13 kann hierbei in der Lage C, vor der Fräswalze 4 verbleiben. Insbesondere bei Verwendung eines mit Messern bestückten Trennorgans 13.1, 13.2 können zweite Trennvorrichtung 9 und erste Trennvorrichtung 3 in dieser Position C gut zusammenwirken. Durch die Schneidmesser 32 und insbesondere durch die oszillierenden Schneidmesser 35 erfolgt die Abtrennung der Silage durch Vorschneiden bevor im Anschluss daran die Trennvorrichtung 3 zum Eingriff kommt und das durch die Trennvorrichtung 9 teilweise der vollständig abgeschnitten Futter aufgreift, ggf. vollständig vom Flachsilo abtrennt und dem Förderband zuführt. Das Zusammenwirken von Trennvorrichtung 3 und Trennvorrichtung 9 erhöht die Entnahmeleistung.

Fig. 6 zeigt eine vereinfachte Ausführungsform, bei der Teleskoparm 10 starr über Stützen 43 an der Ladevorrichtung 2 angebunden ist. Der Teleskoparm 10 ist bei dieser Ausführungsform gegenüber der Trennvorrichtung 3 nicht schwenkbar. Bei dieser Ausführung sind vorzugsweise die Trennorgane 13.1; 13.2 verwendbar, da diese bei eingefahrenem Teleskoparm das bereits beschriebene Zusammenwirken von erster Trennvorrichtung 3 und zweiter Trennvorrichtung 9 erlauben.

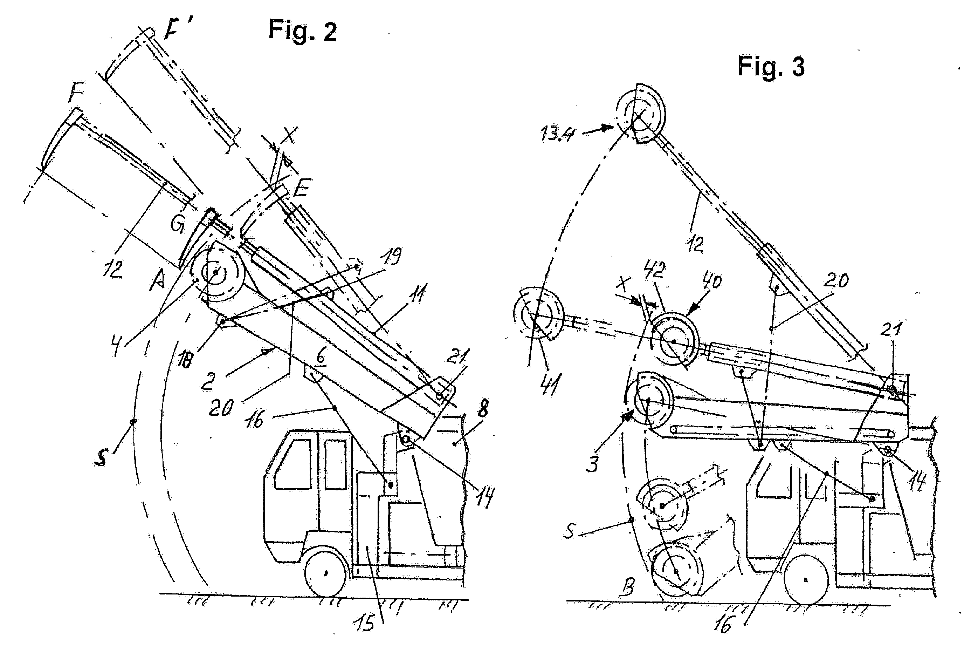

Figur 2 zeigt eine zur in Fig. 1 dargestellten Ausführung im Prinzip gleichartig arbeitende weitere Ausführung, bei der der verschwenk- und ausschiebbare Teleskoparm 10 am Ende seines Tragrohres 12 mit einem Trennorgan 13.3 ausgestattet ist. Das Trennorgan 13.3. umfasst einen Reißkamm 37 mit kammartig angeordneten Reißzinken 39. Der Reißkamm 37 befindet sich in Ruhestellung in einer Lage E, oberhalb der Beladevorrichtung 2 und liegt mit der äußersten Begrenzung auf der Schnittlinie S, bzw. zeigt vorteilhaft einen Abstand x dazu auf um unnötige Reibkontakte zu den Anschnittsflächen zu vermeiden.

Der Reißkamm 37 wird durch Ausschieben und Verschwenken des Teleskoparmes 10 aus einer Lage G bis in eine Lage F bzw. F' gebracht und mit den Reißzinken 39 in die Silage gestoßen, danach wird durch Verkürzen und Verschwenken die Silage vom Flachsilo abgezogen. Hierbei entsteht eine zerklüftete Anschnittsfläche, die Bergeleistung ist jedoch höher als bei den weiteren Trennorganen 13. Nach Erreichen einer Entnahmehöhe, die direkt von der Trennvorrichtung 3 erfasst werden kann sowie vor dem Aufsammeln von am Boden befindlicher Silage wird der Reißkamm 37 eingezogen und wieder in der Ruhestellung, Lage E, gebracht. Die weitere Futterentnahme kann dann von der Trennvorrichtung 3 und damit die Ladeeinrichtung 2 in üblicher Weise erfolgen.

Fig. 3 Zeigt einen Futtermischwagen mit einem als Fräse ausgeführten Trennorgan 13.4. Am Ende des Tragrohres 12 ist eine Fräsvorrichtung 40 angeordnet, so dass die Entnahme von Silage auch im oberen Bereich hoher Flachsilos durch Fräsarbeit erfolgen kann. Der erfassbare Arbeitsbereich und die Funktionsabläufe entsprechen denen der vorstehend ausgeführten Trennvorrichtungen 9.

Fig. 4 zeigt die Draufsicht auf einen Futtermischwagen. Das Trennorgan 13 weist eine Breite Y auf, die etwa einer Breite Y' der ersten Trennvorrichtung 3 entspricht bzw. die Breite Y' etwas überschreitet, so dass das Trennorgan 3 nur dasjenige Futter aus dem Silo lösen und wegfördern muss, das zuvor durch das Trennorgan 13, insbesondere auch in den Eckbereichen, schon vorgeschnitten ist. Hierdurch werden Leistungsspitzen und Verstopfungen vermieden.

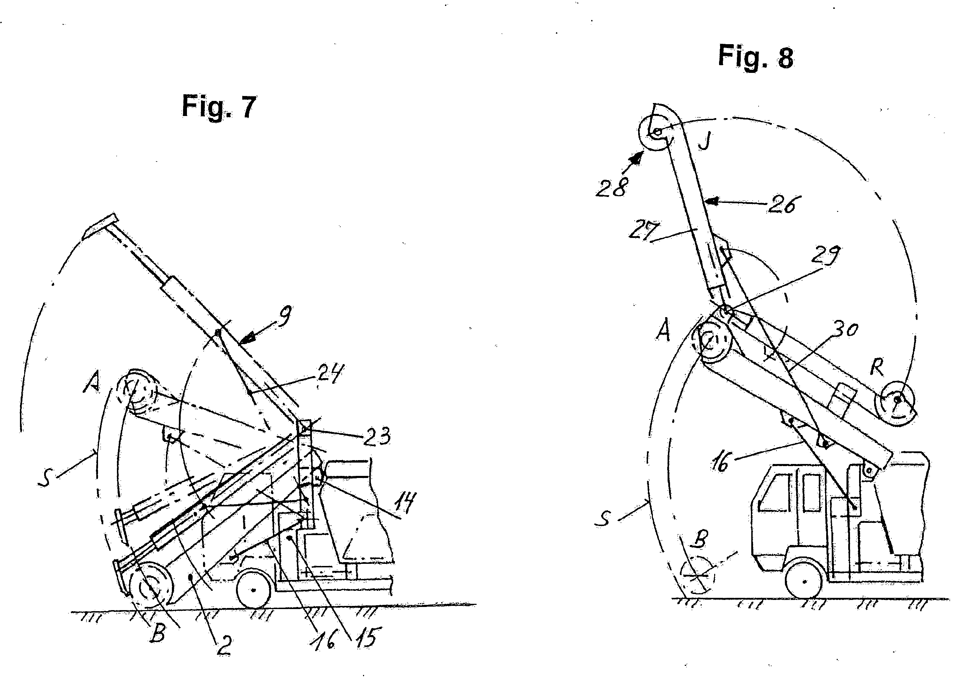

Fig. 7 zeigt einen Futtermischwagen in einer alternativen Ausführungsform, bei dem zur Entlastung der Ladevorrichtung 2 die Trennvorrichtung 9 von der Ladevorrichtung 2 entkoppelt und unabhängig am Gestell 15 des Futtermischwagens 1 um eine Achse 23 pendelnd angeordnet ist. Hierzu wird das Gestell 15 zur Aufnahme dieser Achse 23 erhöht, bzw. um einen Lagerblock erweitert. Die Hubzylinder 24, welche die Schwenkbewegungen erzeugen, können hierbei ebenfalls am Gestell 15 abgestützt sein. Die Arbeitsweise dieser Trennvorrichtung 9 entspricht der einer direkt an der Ladevorrichtung 2 angeordneten Trennvorrichtung 9. Trennvorrichtung 9 und Ladevorrichtung 2 mit daran angebrachter Trennvorrichtung 3 können so getrennt betrieben werden. Die Funktionen sind steuerungstechnisch so angelegt, dass Kollisionen untereinander vermieden werden.

Fig. 8 zeigt eine weitere alternative Ausführung einer Trennvorrichtung 26 für die Entnahme an hohen Flachsilos. Die Trennvorrichtung 26 ist mit einen Schwenkarm 27 und daran angeordneter Fräsvorrichtung 28 ausgestattet. Der Schwenkarm 27 ist am äußeren Ende der Ladevorrichtung 2 um eine Achse 29 pendelnd gelagert und ist über Hubzylinder 30 aus einer Ruhestellung R in eine Arbeitsstellung J verschwenkbar. Funktion und Arbeitsweise dieser Trennvorrichtung 26 entsprechen den vorstehend genannten Trennvorrichtungen.

**Bezugszeichenliste**

| | |
|---|---|
| 1 | Futtermischwagen |
| 2 | Ladevorrichtung |
| 3 | (erste) Trennvorrichtung |
| 4 | Fräswalze |
| 5 | Förderband |
| 6 | Förderschacht (Schwenkarm) |
| 7 | Mischschnecke |
| 8 | Mischbehälter |
| 9 | (zweite) Trennvorrichtung |
| 10 | Teleskoparm |
| 11 | Basisrohr |
| 12 | Tragrohr |
| 13 | Trennorgan |
| 13.1 | Trennorgan (starres Messer) |
| 13.2 | Trennorgan (oszillierendes Schneidemesser) |
| 13.3 | Trennorgan (Reißkamm) |
| 13.4 | Trennorgan (Fräsvorr.) |
| 14 | Achse |
| 15 | Gestell |
| 16 | Hubzylinder |
| 17 | Halter |
| 18 | Lagerpunkt |
| 19 | Lagerpunkt |
| 20 | Hubzylinder |
| 21 | Achse |
| 22 | - |
| 23 | Achse |
| 24 | Hubzylinder |
| 25 | - |
| 26 | Trennvorrichtung |
| 27 | Schwenkarm |
| 28 | Fräsvorrichtung |
| 29 | Achse |
| 30 | Hubzylinder |
| 31 | Tragbalken |
| 32 | Schneidmesser |
| 33 | Schneide |
| 34 | Tragbalken |
| 35 | Schneidmesser |
| 36 | Schneide |
| 37 | Reißkamm |
| 38 | Tragbalken |
| 39 | Reißzinken |
| 40 | Fräsvorrichtung |
| 41 | Fräswalze |
| 42 | Haube |
| 43 | Stützen |
| | |
| A | Pos. (Ladevorr. oben) |
| B | Pos. (Ladevorr. unten) |
| C | Lage (Tragarm eingezogen) |
| D | Lage (Tragarm ausgeschoben) |
| D' | Lage (Tragarm ausgeschoben) |
| E | Lage (Reißzinken) |
| F | Lage (Reißzinken) |
| F' | Lage (Reißzinken) |
| G | Lage (Reißzinken) |
| R | Ruhestellung |
| J | Arbeitsstellung |
| S | Schnittlinie |
| X | Abstand |
| Y | Breite Trennorgan 13 |
| Y' | Breite Trennvorrichtung 3 |
| | |
| | |
| | |
| | |
| | |
| | |
| | |

## Patentansprüche

1. Futtermischwagen (1) mit schwenkbarer Ladevorrichtung (2) , welche mittels einer ersten Trennvorrichtung (3) Silage von einem Flachsilo abtrennt und es über ein Förderband (5) in einen Mischbehälter (8) des Futtermischwagens (1) fördert, **dadurch gekennzeichnet, dass** der Ladevorrichtung (2) eine zweite Trennvorrichtung (9) mit einem Trennorgan (13) zur Erhöhung des Entnahmebereichs zugeordnet ist.

2. Futtermischwagen nach Anspruch 1, **dadurch gekennzeichnet, dass** die zweite Trennvorrichtung (9) an der Oberseite der Ladevorrichtung (2) angeordnet ist.

3. Futtermischwagen nach einem der Ansprüche 1 oder 2, **dadurch gekennzeichnet, dass** die zweite Trennvorrichtung (9) mit einem Teleskoparm (10), welcher ein Basisrohr (11) und ein Tragrohr (12) umfasst, ausgestattet ist.

4. Futtermischwagen nach einem der Ansprüche 1 bis 3, **dadurch gekennzeichnet, dass** das Basisrohr (11) der zweiten Trennvorrichtung (9) starr mit der Ladevorrichtung (2) verbunden ist.

5. Futtermischwagen nach einem der Ansprüchen 1 bis 3, **dadurch gekennzeichnet, dass** der Teleskoparm (10) um eine Achse (21) schwenkbar angeordnet ist.

6. Futtermischwagen nach einem der Ansprüchen 3 bis 5, **dadurch gekennzeichnet, dass** am äußeren Ende des Tragrohres (12) des Teleskoparmes (10) ein Trennorgan (13) angebracht ist.

7. Futtermischwagen nach einem der Anspruch 1 bis 6, **dadurch gekennzeichnet, dass** das Trennorgan (13) als Trennorgan (13.1) ausgeführt ist und einem Tragbalken (31) mit daran starr angeordneten Schneidmessern (32) umfasst.

8. Futtermischwagen nach einem der Ansprüche 1 bis 6, **dadurch gekennzeichnet, dass** das Trennorgan (13) als Trennorgan (13.2) ausgeführt ist und einen Tragbalken (33) mit waagerecht oszillierenden Schneidmessern (34) umfasst.

9. Futtermischwagen nach einem der Anspruch 1 bis 6, **dadurch gekennzeichnet, dass** das Trennorgan (13) als Trennorgan (13.3) ausgeführt ist und einen Reißkamm (37) umfasst.

10. Futtermischwagen nach einem der Anspruch 1 bis 6, **dadurch gekennzeichnet, dass** das Trennorgan (13) als Trennorgan (13.4) ausgeführt ist und eine an dem Tragrohr (12) angeordneten Fräsvorrichtung (40) umfasst.

11. Futtermischwagen nach einem der Ansprüche 1 bis 10, **dadurch gekennzeichnet, dass** die Trennorgane (13; 13.1; 13.2; 13.3; 13.4) eine Breite Y aufweisen, welche in etwa einer Breite (Y') der Trennvorrichtung (3) entspricht.

12. Futtermischwagen nach einem der vorhergehenden Ansprüche, **dadurch gekennzeichnet, dass** das Trennorgan (13; 13.1; 13.2; 13.3; 13.4) bis auf oder hinter eine von der ersten Trennvorrichtung (3) erzeugte Schnittlinie (S) einziehbar ist.

13. Futtermischwagen nach einem der vorhergehenden Ansprüche, **dadurch gekennzeichnet, dass** der Futtermischwagen (1) ein Gestell (15) mit einer Achse (23) umfasst und die zweite Trennvorrichtung (9) um die Achse (23) schwenkbar angeordnet ist.

14. Futtermischwagen nach einem der vorhergehenden Ansprüche, **dadurch gekennzeichnet, dass** die zweite Trennvorrichtung (9) einen Schwenkarm (27) umfasst und der Schwenkarm (27) im Bereich des äußeren Endes der Ladevorrichtung (2) um eine Achse (29) schwenkbar gelagert ist.
